# EUROPEAN PATENT APPLICATION

(11) **EP 1 710 009 A1**
(43) Date of publication of application: **11.10.2006**
(21) Application number: 06006561.2
(22) Date of filing: 29.03.2006
(51) Int. Cl.: B01D 53/94

(54) **Catalyst for purification of diesel exhaust gas**

(30) Priority: 30.03.2005 JP 2005099870
(71) Applicant: KABUSHIKI KAISHA TOYOTA CHUO KENKYUSHO, Aichi-gun, Aichi-ken, 480-1192 (JP)
(72) Inventor: Yamazaki, Kiyoshi, c/o K.K. Toyota Chuo Kenkyusho, Aichi-gun Aichi-ken 480-1192 (JP); Iwasaki, Masaoki, c/o K.K. Toyota Chuo Kenkyusho, Aichi-gun Aichi-ken 480-1192 (JP); Yokota, Koji, c/o K.K. Toyota Chuo Kenkyusho, Aichi-gun Aichi-ken 480-1192 (JP); Banno, Kouzi, c/o K.K. Toyota Chuo Kenkyusho, Aichi-gun Aichi-ken 480-1192 (JP)
(74) Representative: Kramer - Barske - Schmidtchen

(57) **Abstract**

A catalyst for purification of diesel exhaust gas, comprises:
a filter substrate of a wall-flow structure including inlet-side cells which are sealed on a downstream side of the exhaust gas, outlet-side cells which are adjacent to the inlet-side cells and sealed on an upstream side of the exhaust gas, and porous cell division walls which separate the inlet-side cells from the outlet-side cells and have a large number of pores; and
a catalyst layer which is formed on the surface of the cell division walls and/or in the pores of the cell division walls,
wherein the catalyst layer includes a coat layer comprising a metal oxide support containing an iron oxide and a ceria-based oxide; a noble metal supported on the coat layer; and a NOx storage material which is formed of at least one metal selected from the group consisting of alkaline metals and alkaline earth metals and supported on the coat layer.

## Description

### BACKGROUND OF THE INVENTION

### Field of the Invention

The present invention relates to a catalyst for purifying exhaust gas emitted from a diesel engine containing particulate matters (PMs) and nitrogen oxides (NOx), and more specifically to a catalyst for purification of exhaust gas, which can simultaneously remove PMs and NOx with high efficiency.

### Related Background Art

For a gasoline engine, toxic components in exhaust gas are certainly reduced owing to strict emission regulations and advanced technologies that can meet the regulations. On the other hand, for a diesel engine, it is more difficult to purify an exhaust gas than for the gasoline engine because the diesel engine has a unique problem that it emits particulate matters (PMs) in addition to NOx, HC and CO.

The devices for purifying exhaust gas of a diesel engine which have so far been developed and known are widely divided into a trap type device (wall-flow) and an open type device (straight-flow) . As the trap type device for purifying exhaust gas, a sealing type ceramic honeycomb body (Diesel PM filter (hereinafter referred to as DPF)) is known. The DPF has a structure in which both ends of the openings of the cells of the ceramic honeycomb structure are alternately sealed, for example, checkerwise, to work and comprises inlet-side cells which are sealed on the downstream side of the exhaust gas, outlet-side cells which are adjacent to the inlet-side cells and sealed on the upstream side of the exhaust gas, and cell division walls which separate the inlet-side cells from the outlet-side cells to inhibit emission of PMs by filtering the exhaust gas by the pores of the cell division walls to trap PMs.

However, it is necessary to periodically remove the accumulated PMs by any means to regenerate the DPF because the accumulation of PMs increases a pressure loss. Therefore, the regeneration of the DPF has conventionally been carried out by flowing a high temperature exhaust gas to burn the PMs in the case of an increase in a pressure loss. However, in this method, the more the PMs are accumulated, the higher the burning temperature of the PMs becomes. This sometimes results in the melting loss of the DPF and the damage of the DPF due to a thermal stress.

In recent years, as described in Japanese Unexamined Patent Application Publication No. Sho 60-235620 (JP 60-235620A) (Japanese Examined Patent Application Publication No. Hei 07-106290 (JP 07-106290B)), an exhaust gas purifying filter catalyst including a coat layer which is formed from alumina and the like on the surface of the cell division walls of the DPF and supports a catalytic metal such as platinum (Pt) has been developed. The exhaust gas purifying filter catalyst allows the trapped PMs to be subject to oxidation/combustion through catalytic reactions of the catalytic metal. Therefore, combustion simultaneous with or subsequent to trapping of the PMs makes it possible to continuously regenerate the DPF. This method has an advantage that the thermal stress applied to the DPF is small and therefore the DPF can be prevented from being damaged because catalytic reactions occur at relatively low temperatures and combustion can be carried out before the amount of the trapped PMs becomes large.

Japanese Unexamined Patent Application Publication No. Hei 09-094434 (JP 09-094434A) describes an exhaust gas purifying filter catalyst including a coat layer which is formed not only on the cell division walls but also in the pores of the cell division walls and supports a catalytic metal. Supporting the catalytic metal in the pores increases the contact probability of PMs with the catalytic metal so that the PMs trapped in the pores can be subject to oxidation/combustion. In addition, JP 09-094434A also describes a coat layer which further supports an NOx storage material selected from alkaline metals and alkaline earth metals. This increases a NOx removing performance and causes the NOx absorbed in the NOx storage material to be released as NO₂ at a high temperature. Thus, the released NO₂ can accelerate the oxidation of the PMs. The NOx converts the NOx storage material to its nitrate so as to be stored. The nitrate of the NOx storage material has a relatively low melting point and melts at the temperature of the exhaust gas, and thus be able to trap the PMs. Therefore, the PMs trapped by the nitrate of the NOx storage material advantageously come into contact with NO₂ released in the vicinity with high probability so as to be oxidized and purified with high efficiency.

However, in the catalyst which is described in JP 09-094434A and the like, the NOx storage material is poisoned by the toxicity of sulfur components contained in the exhaust gas. This raises the problem of the decrease in PM and NOx removing performances. This is because the NOx storage material adsorbs SOx in the same mechanism as that in which NOx is stored and as a result, the NOx storage material is converted to stable sulfates and consequently loses an NOx storage performance and an NO₂ release performance. Thus it becomes difficult to oxidize the PMs. The NOx storage material which has once been poisoned by sulfur toxicity is difficult to produce nitrates and therefore have reduced performance of accelerating removal of the PMs by melting to trap PMs.

### SUMMARY OF THE INVENTION

The present invention has been accomplished taking the above-mentioned problems into consideration. The problems to be solved are to prevent a failure caused by sulfur components contained in the exhaust gas and to improve the performance of removing PMs and NOx.

The catalyst for purification of diesel exhaust gas of the present invention, comprises:
a filter substrate of a wall-flow structure including inlet-side cells which are sealed on a downstream side of the exhaust gas, outlet-side cells which are adjacent to said inlet-side cells and sealed on an upstream side of the exhaust gas, and porous cell division walls which separate said inlet-side cells from said outlet-side cells and have a large number of pores; and
a catalyst layer which is formed on the surface of said cell division walls and/or in the pores of said cell division walls,
wherein said catalyst layer includes a coat layer comprising a metal oxide support containing an iron oxide and a ceria-based oxide; a noble metal supported on said coat layer; and a NOx storage material which is formed of at least one metal selected from the group consisting of alkaline metals and alkaline earth metals and supported on said coat layer.

In the catalyst for purification of diesel exhaust gas of the present invention, the iron oxide is preferably contained in an amount of 4 wt% or more in the metal oxide support. Further, the ceria-based oxide is preferably contained in an amount of 10 wt% or more as ceria in the metal oxide support.

The ceria-based oxide is preferably at least one selected from the group consisting of CeO₂, CeO₂ZrO₂ composite oxide, CeO₂-ZrO₂-Y₂O₃ composite oxide, CeO₂-ZrO₂-TiO₂ composite oxide and CeO₂-ZrO₂-Al₂O₃ composite oxide. In addition, the ceria-based oxide may further include at least one selected from the group consisting of Pr₂O₃, La₂O₃ and Tb₂O₃.

Moreover, it is preferable that the metal oxide support further contains one selected from the group consisting of Al₂O₃, ZrO₂, TiO₂ and SiO₂. Moreover, it is preferable that the NOx storage material contains at least one alkaline metal selected from the group consisting of K, Na, Cs, Rb and Li.

In the catalyst for purification of diesel exhaust gas of the present invention, the coat layer is preferably formed in an amount of 30 to 300 g per 1 liter of the filter substrate. Further, the noble metal is preferably supported in an amount of 0.1 to 10 g per 1 liter of the filter substrate. Furthermore, the NOx storage material is preferably supported in an amount of 0.05 to 1.0 mole per 1 liter of the filter substrate.

The catalyst for purification of diesel exhaust gas of the present invention accelerates the exhibition of an oxygen storage/release performance by an iron oxide and a ceria-based oxide contained in the metal oxide support. Thus, oxygen released from these oxides is efficiently supplied to the trapped PMs to oxidize and consequently remove the PMs. The noble metal oxidizes NO to form NO₂ in a lean atmosphere at a low temperature of about 200 °C. The formed NO₂ is stored as a nitrite ion or a nitrate ion in the NOx storage material. In a lean atmosphere at 350 °C or higher, the NOx storage material releases NO₂ which has a high oxidative activity as an NOx. The released NO₂ efficiently then oxidizes and removes the PMs. At the same time, the NO₂ is reduced to N₂ to be removed.

The nitrate of the NOx storage material has a relatively low melting point of about 250 to 400 °C so as to be in a molten state at an exhaust gas temperature. The molten state facilitates the trapping of the PMs and improves contact probability between each catalyst component and PMs. Therefore, the reaction of the PMs with oxygen released from the iron oxide and the ceria-based oxide is accelerated and the reaction of the PMs with NO₂ released from the NOx storage material is also accelerated. This shows that the catalyst for purification of exhaust gas has an excellent performance of removing PMs and NOx .

The NOx storage material stores NOx in the exhaust gas in a lean atmosphere and releases NOx in the exhaust gas in a rich atmosphere. The released NOx is reduced by HC and CO present in abundance in the rich atmosphere to be removed. Thus, the catalyst for purification of exhaust gas of the present invention exhibits a further higher performance of removing NOx.

To recover NOx storage performance of the NOx storage material which has been poisoned by sulfur toxicity, it is effective to carry out regeneration wherein a high-temperature exhaust gas in a rich atmosphere is flowed by, for example, adding a fuel to the exhaust gas. At this time, in the catalyst for purification of exhaust gas of the present invention, the oxygen stored by the iron oxide and the ceria-based oxide is released, thereby HC of the fuel contained in the exhaust gas is partly oxidized to be activated. Therefore, the SOx can be efficiently desorbed from the NOx storage material which has been poisoned by sulfur toxicity. During regeneration, the noble metal is poisoned by the toxicity of CO which is simultaneously generated, thereby resulting in a problem of inhibition of SOx desorption. However, the catalyst for purification of exhaust gas of the present invention is able to cause CO to be oxidized by the oxygen released from the iron oxide and the ceria-based oxide, and thereby the problem above can be prevented so that the performance of removing PMs and NOx is further improved.

### BRIEF DESCRIPTION OF THE DRAWINGS

Fig. 1 is a schematic view describing the catalyst for purification of exhaust gas according to an embodiment of the present invention.
Fig. 2 is a graph showing the amount of the sulfur desorbed from each catalyst.
Fig. 3 is a graph showing the soot burning velocity of each catalyst.
Fig. 4 is a graph showing the NOx removing rate of each catalyst.

### DETAILED DESCRIPTION OF THE PREFERRED EMBODIMENTS

The catalyst for purification of exhaust gas of the present invention comprises a filter substrate, and a catalyst layer formed on the surface of the cell division walls and/or in the pores of the cell division walls of the filter substrate. The filter substrate may be formed from metallic foams or thermally resistant nonwoven fabrics, as well as from thermally resistant ceramics such as cordierite, silicon carbide and the like. For example, the production of the filter substrate from a thermally resistant ceramic comprises preparation of a clayey slurry using cordierite powder as a major component, extrusion molding and calcining thereof. Instead of the cordierite powder, alumina powder, magnesia powder and silica powder may be blended to form a cordierite composition. Subsequently, openings on one end surface of cells are sealed checkerwise using the clayey slurry and the like, and openings of cells adjacent to the cells sealed on the one end surface are sealed on the other opposite end surface. The filter substrate having a honeycomb structure can be produced by subsequently fixing the sealing material using a calcining method and the like. The shapes of the inlet-side cells and the outlet-side cells are not specifically limited and can be triangular in section, square in section, hexagonal in section, and circular in section.

The cell division walls are of porous structure that allows the exhaust gas to penetrate. The cell division walls with pores can be prepared by previously mixing combustible powdery materials including carbon powders, wooden powder, starch, resin powder and the like with the slurry described above and subsequently removing them by calcination. The pore size and pore volume can be controlled by adjusting a particle diameter and the amount of the added combustible powdery materials. The pores allow the inlet-side cells and outlet-side cells to connect with each other. The PMs are trapped in the pores, and the gas can pass through pores from the inlet-side cells to the outlet-side cells.

The porosity of the cell division wall is preferably 40 to 70%. An average pore diameter of the cell division wall is preferably 10 to 40 µm. The above ranges of the porosity and the average pore diameter can suppress an increase in a pressure loss even if 100 to 200 g/L of the catalyst layer is formed and can also suppress a decrease in the strength. Thus PMs can be more efficiently trapped.

The catalyst for purification of exhaust gas of the present invention has the catalyst layer on the cell division wall of the filter substrate. The catalyst layer may be formed only on the surface of the cell division wall, and preferably is formed also on the surface of the pore in the cell division wall. The catalyst layer includes a coat layer, which is composed of a metal oxide support and supports a noble metal and an NOx storage material. The coat layer composed of the metal oxide support contains at least an iron oxide and a ceria-based oxide.

Such iron oxide generally refers to Fe₂O₃, but the other iron oxide which is to be converted to Fe₂O₃ having an oxygen storage/release performance through oxidizing reaction during use can also be used. The iron oxide is preferably contained as Fe₂O₃ in the metal oxide support in an amount of 4 wt% or more, and more preferably 6 to 20 wt%. A content of less than 4 wt% tends to be difficult to exhibit the effect of using the iron oxide.

As a ceria-based oxide, CeO₂, CeO₂-ZrO₂ composite oxide, CeO₂-ZrO₂-Y₂O₃ composite oxide, CeO₂-zrO₂-TiO₃ composite oxide, CeO₂-zrO₂-Al₂O₃ composite oxide and the like can be used. Pr₂O₃, La₂O₃ and Tb₂O₃ may be added to the above oxides within a solid solubility range. The ceria-based oxide is preferably contained as CeO₂ in the metal oxide support in an amount of 10 wt% or more, and more preferably 12 to 40 wt%. A content of less than 10 wt% tends to be difficult to exhibit the effect of using the ceria-based oxide.

As a metal oxide support other than the iron oxide and the ceria-based oxide, a composite oxide comprised of at least a kind of or a plurality of kinds of oxides including Al₂O₃, ZrO₂, TiO₂, SiO₂ and the like can be used.

To form a catalyst layer, slurry is prepared from a metal oxide support powder with a binding component such as alumina sol, and water. Then, the slurry is adhered to the cell division wall to be calcined to form a coat layer. Then a noble metal and an NOx storage material are supported on the coat layer. Alternatively, the catalyst layer can be formed using slurry which is prepared from a catalyst powder comprised of a metal oxide support powder which is previously made support a noble metal. To adhere the slurry to the cell division wall, a dipping method can generally be used. However, it is desirable to forcibly fill the slurry into the pores of the cell division wall using an air blowing or suction method, and then to remove any excessive slurry in pores.

In the above case, the amount of the formed coat layer or catalyst layer is preferably 30 to 300 g per 1 L of the filter substrate. Less than 30 g/L of the coat layer or catalyst layer inevitably deteriorates the durability of the noble metal. More than 300 g/L of the coal layer or catalyst layer causes pressure loss to be too high so as not to be practical.

The noble metal supported on the coat layer may be the one that accelerates the oxidation of PMs through its catalytic reaction. As such noble metal, at least one kind or a plurality of kinds selected from platinum group noble metals including Pt, Rh, Pd and the like are preferably used. Pt having high oxidative activity is particularly desirable. The amount of the supported noble metal is preferably within a range between 0.1 and 10 g per 1 liter of the filter substrate. Less than this supporting amount causes activity to be too low so as not to be suitable for practical use. Exceeding this range causes activity to be saturated, and results in an increase in a production cost. The noble metal can be supported using absorption supporting method or dipping supporting method that uses a solution of the nitrate and the like of the noble metal.

The NOx storage material supported on the coat layer can be selected from alkaline metals including K, Na, Cs, Rb and Li and alkaline earth metals including Ba, Ca, Mg and Sr to be used. Specifically, at least one kind of alkaline metals having an excellent performance of removing PMs is preferably used. Inclusion of the NOx storage material in the catalyst layer allows NO₂ generated by oxidation by the noble metal to be stored in the NOx storage material, thereby resulting in an improved activity to remove NOx as well as an improved performance of oxidizing PMs.

The NOx storage material adsorbs NOx to be converted to a nitrite or nitrate, which is preferably melted particularly at the temperature of the exhaust gas. The nitrite or nitrate can trap PMs by when it is in a molten state, thus improving a contact probability between each catalytic component and PM, as well as a performance of removing PMs. The nitrates which become in a molten state at the temperature of the exhaust gas include lithium nitrate (melting point: 254 °C), sodium nitrate (melting point: 310 °C), potassium nitrate (melting point: 337 °C), and cesium nitrate (melting point: 417 °C) . Therefore, at least an alkaline metal is preferably used as the NOx storage material.

The amount of the supported NOx storage material is preferably within a range between 0.05 and 1.0 mole per 1 liter of the filter substrate. Less than this range of supported amount causes the activity of the NOx storage material to be too low so as not to be suitable for practical use. Exceeding this range of supported amount covers the noble metal so as to deteriorate activity of the NOx storage material. Dipping supporting method using a solution of an acetate, a nitrate or the like of the NOx storage material may be used to support the NOx storage material on the coat layer. Alternatively, a metal oxide support powder which supports the NOx storage material in advance can be used to form the catalyst layer.

### [Examples]

The present invention is hereinafter described using Examples and Comparative examples.

### (Example 1)

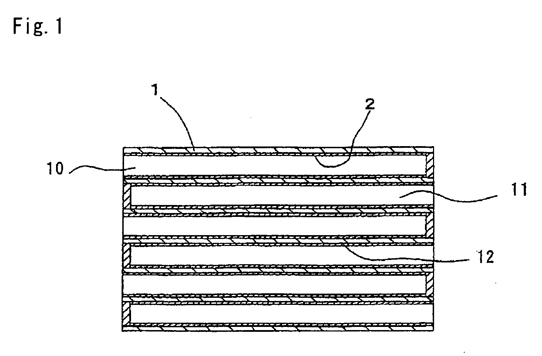

Fig. 1 shows the catalyst for purification of exhaust gas used in this example. This catalyst includes a filter substrate 1 having inlet-side cells 10 which are sealed on the downstream side of exhaust gas, outlet-side cells 11 which are adjacent to the inlet-side cells 10 and sealed on the upstream side of the exhaust gas, and cell division walls 12 which separate the inlet-side cells 10 from the outlet-side cells 11; and a catalyst layer 2 which is formed on the surface of the cell division wall 12 and the surface of the pores in the cell division wall 12.

The filter substrate 1 used is a DPF made of cordierite which are commercially available. The DPF has a test piece size (diameter 30 mm x length 50 mm), and the cell division wall 12 has a porosity of 60 to 67 %, a pore capacity of 0.58 to 0.65 cc/g, and an average pore diameter of 25 to 35 µm. The method of producing the catalyst layer 2 is hereinafter described to substitute for the detailed description of constitution thereof.

The method included: preparation of a slurry which contains 70 parts by weight of γ-Al₂O₃ powder (specific surface 220 m²/g), 35 parts by weight of TiO₂-ZrO₂ solid solution powder (atom ratio Ti/Zr=4/6, specific surface 100 m²/g), 35 parts by weight of CeO₂ powder (specific surface 120 m²/g) and 12 parts by weight of Fe₂O₃ powder (specific surface 12 m²/g), and has a viscosity of 100 cps or less which is provided by mixing them with alumina sol and ion exchange water; milling of the slurry so that the average diameter of solid particles becomes 1 µm or less; dipping of the above-mentioned DPF in the slurry to cause the slurry to permeate the cell; getting up the DPF; aspiration of the slurry from the end surface on the side opposite to the side which has been dipped to remove excessive slurry; drying by an air circulation method; and then calcining at 500 °C for 3 hours. This procedure was carried out two times to substantially equalize the amount of the formed coat layer between the inlet-side cells 10 and the outlet-side cells 11. The amount of the formed coat layer was 152 g per 1 liter of the DPF. The coat layer is formed on the surfaces of the inlet-side cells 10 and the outlet-side cells 11 and the surfaces on the pores thereof.

To support 1.5 g/L of Pt on the coat layer, a predetermined amount of the dinitrodiammine platinum solution having a predetermined concentration was impregnated, dried, and then calcined at 300 °C for 3 hours. To further support 0.3 mole/L of Li, 0.05 mole/L of Ba, and 0.025 mole/L of K which are the NOx storage materials to the coat layer, a mixed aqueous solution of lithium acetate, barium acetate and potassium acetate having a predetermined concentration was impregnated, dried, and then calcined at 300 °C for 3 hours. These procedures allowed the catalyst layer 2 supporting Pt and the NOx storage materials to be formed. The metal oxide support in the catalyst layer 2 contained 23 wt% of ceria and 7.9 wt% of iron oxide.

### (Example 2)

The catalyst layer 2 was also formed in the same manner as described in Example 1 except for using a slurry containing 70 parts by weight ofy-Al₂O₃ powder used in Example 1, 58 parts by weight of TiO₂-ZrO₂ solid solution powder used in Example 1, 12 parts by weight of CeO₂ powder used in Example 1, and 12 parts by weight of Fe₂O₃ powder used in Example 1. The other constitution was the same as that of Example 1. The metal oxide support in the catalyst layer 2 contained 7.9 wt% of ceria and 7.9 wt % of iron oxide .

### (Example 3)

The catalyst layer 2 was also formed in the same manner as described in Example 1 except for using a slurry containing 70 parts by weight ofγ-Al₂O₃ powder used in Example 1, 44 parts by weight of TiO₂-ZrO₂ solid solution powder used in Example 1, 35 parts by weight of CeO₂ powder used in Example 1,and 3 parts by weight of Fe₂O₃ powder used in Example 1. The other constitution was the same as that of Example 1. The metal oxide support in the catalyst layer 2 contained 23 wt% of ceria and 2.0 wt% of iron oxide.

### (Comparative example 1)

The catalyst layer 2 was also formed in the same manner as described in Example 1 except for using a slurry containing 70 parts by weight ofγ-Al₂O₃ powder used in Example 1, 70 parts by weight of TiO₂-ZrO₂ solid solution powder used in Example 1, and 12 parts by weight of CeO₂ powder used in Example 1. The other constitution was the same as that of Example 1. The metal oxide support in the catalyst layer 2 contained 7.9 wt% of ceria and none of iron oxide.

### (Comparative example 2)

The catalyst layer 2 was also formed in the same manner as described in Example 1 except for using a slurry containing 70 parts by weight ofγ-Al₂O₃ powder used in Example 1, 70 parts by weight of TiO₂-ZrO₂ solid solution powder used in Example 1, and 12 parts by weight of Fe₂O₃ powder used in Example 1. The other constitution was the same as that of Example 1. The metal oxide support in the catalyst layer 2 contained 7.9 wt% of iron oxide and none of ceria.

### (Comparative example 3)

The catalyst layer 2 was also formed in the same manner as described in Example 1 except that Li, Ba and K were not supported on the coat layer. The other constitution was the same as that of Example 1. The metal oxide support in the catalyst layer 2 contained 23 wt% of ceria and 7.9 wt% of iron oxide.

### <Test and evaluation>

The table 1 shows together the compositions of the catalysts used in each Example and each Comparative example.

**[Table 1]**

| | **Part by weight in catalyst layer** | | | | **Pt** | **NOx storage material** |
|---|---|---|---|---|---|---|
| | **Al**_{**2**}O_{**3**} | **TiO**_{**2**}**-ZrO**_{**2**} | **CeO**_{**2**} | **Fe**_{**2**}**O**_{**3**} | | |
| **Example 1** | **70** | **35** | **35** | **12** | **Used** | **Used** |
| **Example 2** | **70** | **58** | **12** | **12** | **Used** | **Used** |
| **Example 3** | **70** | **14** | **35** | **3** | **Used** | **Used** |
| **Comparative example 1** | **70** | **70** | **12** | **-** | **Used** | **Used** |
| **Comparative example 2** | **70** | **70** | **-** | **12** | **Used** | **Used** |
| **Comparative example 3** | **70** | **35** | **35** | **12** | **Used** | **Not used** |

The catalysts used in each Example and each Comparative example were first mounted in an evaluation device. Then a high temperature durability test was carried out by heating the catalysts at 700 °C for 5 hours while alternately flowing a lean model gas and a rich model gas shown in Table 2 for four minutes and for one minute, respectively. Each model gas was flowed at a rate of 1000 ml/minute.

**[Table 2]**

| | **O**_{**2**} **(%)** | **CO**_{**2**} **(%)** | **CO (%)** | **H**_{**2**} **(%)** | **H**_{**2**}**O (%)** | **N**_{**2**} | **Time** |
|---|---|---|---|---|---|---|---|
| **Lean gas** | **10** | **10** | **-** | **-** | **3** | **Balance** | **4 mins.** |
| **Rich gas** | **-** | **-** | **1.5** | **0.5** | **3** | **Balance** | **1 min.** |

A sulfur poisoning test was carried out on above-mentioned catalysts, which had been subject to the high temperature durability test, by heating the catalysts at 350 °C for 41 minutes while alternately flowing a lean model gas and a rich model gas shown in Table 3 for 120 seconds and for three seconds, respectively. Each model gas was flowed at a rate of 30,000 ml/minute, and sulfur was supplied at a rate of 1.5 g per 1 liter of the catalyst.

**[Table 3]**

| | **O**_{**2**} **(%)** | **C**_{**3**}**H**_{**6**} **(ppm)** | **NO (ppm)** | **CO**_{**2**} **(%)** | **H**_{**2**}**O (%)** | **SO**_{**2**} **(ppm)** | **N**_{**2**} | **Time** |
|---|---|---|---|---|---|---|---|---|
| **Lean gas** | **10** | **-** | **400** | **10** | **10** | **30** | **Balance** | **120 secs.** |
| **Rich gas** | **1** | **8300** | **-** | **10** | **10** | **30** | **Balance** | **3 secs.** |

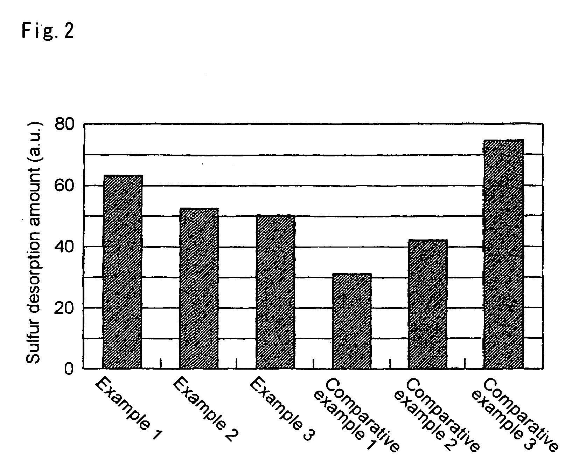

A sulfur desorption test was carried out on the above catalysts, which had been subject to the sulfur poisoning test, by supplying a rich model gas shown in Table 4 at 600 °C of the temperature of a catalyst bed for 10 minutes after supplying a lean model gas shown in Table 4 at 600 °C of the temperature of a catalyst bed for 10 minutes. The model gas was flowed at a rate of the 30,000 ml/minute. The sulfur desorbed from each catalyst in this test was measured using a total sulfur analyzer (detects SOx and H₂S). Fig. 2 shows the results.

**[Table 4]**

| | **O**_{**2**} **(%)** | **n-C**_{**16**}**H**_{**34**} **(ppm)** | **H**_{**2**}**O (%)** | **N**_{**2**} | **Time** |
|---|---|---|---|---|---|
| **Lean gas** | **2** | **-** | **5** | **Balance** | **10 mins.** |
| **Rich gas** | **0.5** | **320** | **5** | **Balance** | **10 mins.** |

The amount of the sulfur desorbed from the catalyst used in each Example is larger than that from the catalyst used in Comparative examples 1 and 2. Since all of these catalysts contain the same amount of the NOx storage material, it is apparent that the catalyst used in each Example releases sulfur from a many of the NOx storage materials when the sulfur desorption test was carried out, so that there exist many NOx storage materials having a recovered NOx storage performance after being subject to the sulfur desorption test, while the catalysts used in Comparative examples 1 and 2 contain many NOx storage materials which remained in the state of a sulfate after being subject to the sulfur desorption test.

The catalyst used in Comparative example 3 does not contain the NOx storage material. It is therefore considered that sulfur softly adheres to the catalyst layer when Comparative example 3 was subject to the sulfur poisoning test and was desorbed at the time of being subject to sulfur desorption test, thus resulting in a large amount of the desorbed sulfur. It is needless to say that despite a large amount of released sulfur, the catalyst used in Comparative example 3 has an NOx removing performance markedly lower than those of the catalysts used in each Example and Comparative examples 1 and 2, because it can hardly adsorb NOx.

After subjecting each catalyst to the sulfur desorption testing, 6 catalysts were mounted on the exhaust system of an engine bench to which a diesel engine (emission: 2000 cc) was mounted, and then the engine was operated under conditions including an engine revolutions of 2000 rpm, torque of 21 Nm and 250 °C of exhaust gas temperature for two hours to adhere the PMs to the catalysts. After that, soluble organic substances (SOF) contained in PMs were removed by carrying out calcining in the air at 300 °C for two hours such that soot alone adheres to the catalysts. At this time, 3 g of the soot adheres per 1 liter of each catalyst.

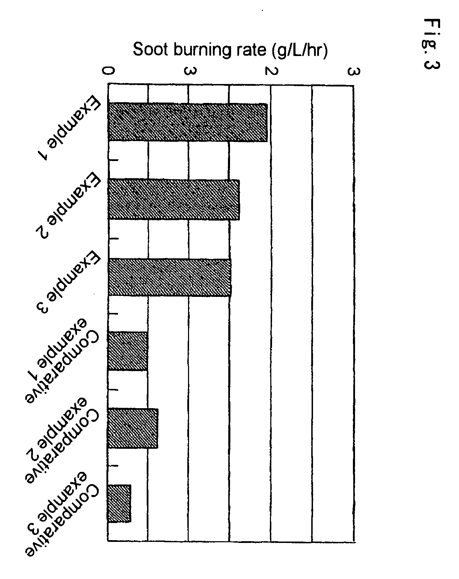

Each catalyst to which the soot had thus been adhered was mounted to a normal pressure fixed bed flow type reactor and the lean model gas shown in Table 5 was supplied thereto at 400 °C of the catalyst bed temperature. The model gas was flowed at a rate of 15, 000 ml/minute. At this time, the amount of the formed CO₂ and CO was continuously measured to calculate the burning rate of the soot from the measurements. Fig. 3 shows the results.

**[Table 5]**

| | **O**_{**2**} **(%)** | **NO (ppm)** | **H**_{**2**}**O (%)** | **N**_{**2**} |
|---|---|---|---|---|
| **Lean gas** | **10** | **400** | **10** | **Balance** |

The results show that the catalyst used in each Example exhibits a soot burning rate and a PM removing activity higher than those of the catalyst used in each Comparative example. It is apparent that this is resulted from the effects of containing iron oxide and ceria in the coat layer and supporting Pt and the NOx storage material. That is to say, it is considered that the exhibition of the higher soot burning rate was achieved because the catalyst used in each Example had a high oxygen storage/release performance of iron oxide and ceria so as to be able to supply concentrated oxygen to the PMs and because concentrated NO₂ was supplied to the PMs trapped by the NOx storage material which had been restored from sulfur-poisoning.

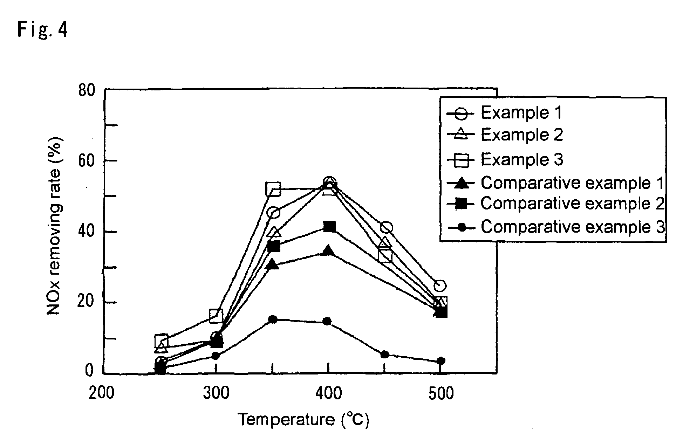

Furthermore, each catalyst which had been subject to the sulfur desorption test was mounted to the normal pressure fixed bed flow type reactor, and a NOx removing rate thereof was then measured while alternately flowing the lean model gas and the rich model gas, which are shown in Table 6, at 250 to 500 °C of the predetermined catalyst bed temperature for 30 seconds and for 3 seconds, respectively. Fig. 4 shows the results. Each model gas was flowed at a rate of 30,000 ml/minute and simultaneously at a space velocity of about 51,000 hr⁻¹. This simulates the exhaust gas emitted from a diesel engine operated under typical conditions.

**[Table 6]**

| | **O**_{**2**} **(%)** | **C**_{**3**}**H**_{**6**} **(ppm)** | **NO (ppm)** | **CO**_{**2**} **(%)** | **H**_{**2**}**O (%)** | **N**_{**2**} | **Time** |
|---|---|---|---|---|---|---|---|
| **Lean gas** | **10** | **-** | **200** | **10** | **10** | **Balance** | **30 secs.** |
| **Rich gas** | **1** | **8300** | **200** | **10** | **10** | **Balance** | **3 secs.** |

The results show that the catalyst used in each Example exhibits an NOx removing rate higher than that of the catalyst used in each Comparative example. It is apparent that this is resulted from the effects of containing iron oxide and ceria in the coat layer and supporting Pt and the NOx storage material. That is to say, it is considered that the catalyst used in each Example contains higher ratio of the NOx storage material recovered from being sulfur-poisoned compared with the catalysts used in Comparative examples 1 and 2, thereby exhibiting a high NOx absorption performance . The catalyst used in Comparative example 3 does not support the NOx storage material and therefore have extremely low NOx removing rate.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A catalyst for purification of diesel exhaust gas, comprising:
a filter substrate of a wall-flow structure including inlet-side cells which are sealed on a downstream side of the exhaust gas, outlet-side cells which are adjacent to said inlet-side cells and sealed on an upstream side of the exhaust gas, and porous cell division walls which separate said inlet-side cells from said outlet-side cells and have a large number of pores; and
a catalyst layer which is formed on the surface of said cell division walls and/or in the pores of said cell division walls,
wherein said catalyst layer includes a coat layer comprising a metal oxide support containing an iron oxide and a ceria-based oxide; a noble metal supported on said coat layer; and a NOx storage material which is formed of at least one metal selected from the group consisting of alkaline metals and alkaline earth metals and supported on said coat layer.

2. The catalyst according to claim 1, wherein said iron oxide is included in an amount of 4 wt% or more in said metal oxide support.

3. The catalyst according to claim 1 or 2, wherein said ceria-based oxide is included in an amount of 10 wt% or more as ceria in said metal oxide support.

4. The catalyst according to any one of claims 1 to 3,
wherein said ceria-based oxide is at least one selected from the group consisting of CeO₂, CeO₂-zrO₂ composite oxide, CeO₂-zrO₂-Y₂O₃ composite oxide, CeO₂-ZrO₂-TiO₂ composite oxide and CeO₂-ZrO₂-Al₂O₃ composite oxide.

5. The catalyst according to any one of claims 1 to 4,
wherein said metal oxide support further contains at least one selected from the group consisting of Al₂O₃, ZrO₂, TiO₂ and SiO₂.

6. The catalyst according to any one of claims 1 to 5,
wherein said coat layer is formed in an amount of 30 to 300 g per 1 liter of the filter substrate.

7. The catalyst according to any one of claims 1 to 6,
wherein said noble metal is supported in an amount of 0.1 to 10 g per 1 liter of the filter substrate.

8. The catalyst according to any one of claims 1 to 7,
wherein said NOx storage material includes at least one alkaline metal selected from the group consisting of K, Na, Cs, Rb and Li.

9. The catalyst according to any one of claims 1 to 8,
wherein said NOx storage material is supported in an amount of 0.05 to 1.0 mole per 1 liter of the filter substrate.
